(19) Europäisches Patentamt / European Patent Office / Office européen des brevets

(11) **EP 4 195 395 B1**

(12) **EUROPEAN PATENT SPECIFICATION**

(45) Date of publication and mention of the grant of the patent:
**27.05.2026 Bulletin 2026/22**

(21) Application number: **21944411.4**

(22) Date of filing: **20.10.2021**

(51) International Patent Classification (IPC):
*H01M 10/04* (2006.01)   *H01M 50/403* (2021.01)
*H01M 50/431* (2021.01)   *H01M 50/451* (2021.01)
*H01M 50/454* (2021.01)   *H01M 50/489* (2021.01)
*H01M 4/505* (2010.01)   *H01M 4/587* (2010.01)
*H01M 50/491* (2021.01)

(52) Cooperative Patent Classification (CPC):
**H01M 50/431; H01M 10/0431; H01M 50/403;**
**H01M 50/451; H01M 50/454; H01M 50/489;**
H01M 4/505; H01M 4/587; H01M 50/491;
H01M 2220/20; H01M 2300/0002; Y02E 60/10;
Y02P 70/50

(86) International application number:
**PCT/CN2021/125093**

(87) International publication number:
**WO 2023/065178 (27.04.2023 Gazette 2023/17)**

(54) **ELECTRODE ASSEMBLY, BATTERY, BATTERY MODULE, BATTERY PACK, AND ELECTRONIC APPARATUS**

ELEKTRODENANORDNUNG, BATTERIE, BATTERIEMODUL, BATTERIEPACK UND ELEKTRONISCHE VORRICHTUNG

ENSEMBLE ÉLECTRODE, BATTERIE, MODULE DE BATTERIE, BLOC-BATTERIE ET APPAREIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Contemporary Amperex Technology (Hong Kong) Limited**
**Central, Central And Western District (HK)**

(72) Inventors:
• **HUANG, Yuping**
  **Ningde City, Fujian 35100 (CN)**
• **MA, Yunjian**
  **Ningde City, Fujian 35100 (CN)**
• **LIN, Mingfeng**
  **Ningde City, Fujian 35100 (CN)**
• **LI, Yanhui**
  **Ningde City, Fujian 35100 (CN)**
• **ZHANG, Jianping**
  **Ningde City, Fujian 35100 (CN)**
• **CHEN, Bing**
  **Ningde City, Fujian 35100 (CN)**
• **LIU, Yumeng**
  **Ningde City, Fujian 35100 (CN)**
• **XIA, Zhiyu**
  **Ningde City, Fujian 35100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(56) References cited:
CN-A- 101 276 895    CN-A- 102 206 420
CN-A- 106 328 865    CN-A- 109 994 690
CN-A- 112 310 558    CN-A- 112 310 558
KR-A- 20170 038 297    KR-A- 20170 062 170

KR-A- 20170 062 170     US-A1- 2008 096 103
US-A1- 2019 305 278

**Description**

Technical Field

The present application belongs to the technical field of batteries, and specifically relates to an electrode assembly, a battery, a battery module, a battery pack and a powered device.

Background Art

Rechargeable and dischargeable batteries are widely used due to the advantages of a high energy density, a long cycle life, a reliable working performance, no pollution, no memory effect, etc. In recent years, with the application and promotion of rechargeable and dischargeable batteries in various electronic products and new energy vehicles, the safety performance thereof has received more and more attention. Traditional batteries include square batteries and cylindrical batteries. Compared with square batteries, cylindrical batteries have the advantages of a better structural stability, fewer components and parts, a simple preparation process, etc. In a cylindrical battery, a wound electrode assembly is usually used, wherein the wound electrode assembly is formed by winding a positive electrode piece, a separator and a negative electrode piece, and a central hole is formed in the center of the wound electrode assembly. However, the central hole of the cylindrical battery easily collapses. The collapse of the central hole refers to the phenomenon that the central hole is partially or completely blocked during battery formation and cyclic charge and discharge. The collapse of the central hole makes the battery have exhaust difficulties and increased safety risk, thereby seriously affecting the cycle performance of the battery. CN 112 310 558 A relates to an inorganic coating slurry comprising some tricalcium silicate coated on a Li-ion battery separator; it is mentioned that tricalcium silicate can absorb the internal moisture of the battery, thus preventing the moisture from affecting the battery, and can also react with acid such as hydrofluoric acid inside the battery, thus optimizing the battery performance. KR 2017 0062170 A relates to a heat resisting separator for a secondary battery and a lithium secondary battery comprising the same; the heat resistant separator may comprise a layer comprising inorganic oxide particles selected from the group consisting of dicalcium silicate ($Ca_2SiO_4$) and tricalcium silicate ($Ca_3SiO_3$). US 2019/305278 A1 relates to inorganic particles such as calcium silicate for a nonaqueous electrolyte battery. US 2008/096103 A1 relates to a separator for lithium polymer batteries and an associated method of production; in an example, a separator is coated with a mixture comprising some Portland cement.

Summary of the Invention

The invention is defined by the appended claims. An object of the present application is to provide an electrode assembly, a battery, a battery module, a battery pack and a powered device, in order to solve the problem of central hole collapse in the electrode assembly and the battery, and improve the safety performance and cycle performance of the battery.

A first aspect of the present application provides an electrode assembly comprising a first electrode piece, a second electrode piece with opposite polarity to the first electrode piece, and a separator arranged between the first electrode piece and the second electrode piece, wherein the electrode assembly is obtained by winding the first electrode piece, the second electrode piece and the separator; and the separator comprises a base film and a coating provided on at least part of the surface of the base film, and the coating comprises a hydraulic inorganic material capable of hardening upon reaction with water.

In the present application, by means of providing a coating containing a hydraulic inorganic material on the surface of the base film and the utilization of the principle that the hydraulic inorganic material can harden upon reaction with water, the strength of the separator can be significantly increased, making it less likely to deform during battery formation and charge-discharge cycling, thereby effectively inhibiting the collapse of the central hole and the growth of dendrites, thus improving the safety performance of the battery and prolonging the cycle life of the battery.

In any embodiment of the present application, the hydraulic inorganic material comprises at least one compound represented by formula 1,

$$\text{first oxide} \cdot a \text{ second oxide} \cdot b \text{ sulfate} \cdot c \text{ halide} \qquad \text{formula 1}$$

wherein $0 < a \leq 6$, $0 \leq b \leq 4$, and $0 \leq c \leq 4$; the first oxide represents CaO or BaO; the second oxide represents component 1, component 2, or a combination thereof, wherein component 1 represents $SiO_2$, $Al_2O_3$, $Fe_2O_3$, or a combination of two or more thereof, and component 2 represents FeO, MgO, BaO, $K_2O$, $Na_2O$, $TiO_2$, CuO, $Cr_2O_3$, $P_2O_5$, $SO_3$, or a combination of two or more thereof; the sulfate represents $CaSO_4$, $MgSO_4$, $BaSO_4$, $SrSO_4$, $ZnSO_4$, $Al_2(SO_4)_3$, $FeSO_4$, $Fe_2(SO_4)_3$, or a combination of two or more thereof; and the halide represents $CaCl_2$, $CaF_2$, or a combination thereof.

The above compound represented by formula 1 can effectively inhibit the collapse of the central hole and the growth of dendrites, without significantly affecting the electrochemical performance of the battery.

Optionally, the weight ratio of component 1 to component 2 is (95-100) : (0-5). When the weight ratio of component 1 to component 2 is in an appropriate range, it is beneficial to adjust the compressive strength and heat of hydration of the coating, so that the coating can have an appropriate compressive strength upon reaction with water and also no excess release of heat upon reaction with water.

In any embodiment of the present application, the hydraulic inorganic material comprises one or more of compounds represented by formulas 1-1 to 1-8,

$$CaO \cdot a1\ SiO_2 \cdot b\ sulfate \cdot c\ halide \qquad \text{formula 1-1}$$

$$CaO \cdot a2\ Al_2O_3 \cdot b\ sulfate \cdot c\ halide \qquad \text{formula 1-2}$$

$$CaO \cdot a3\ Fe_2O_3 \cdot b\ sulfate \cdot c\ halide \qquad \text{formula 1-3}$$

$$CaO \cdot a4\ Al_2O_3 \cdot a5\ SiO_2 \cdot b\ sulfate \cdot c\ halide \qquad \text{formula 1-4}$$

$$CaO \cdot a6\ Al_2O_3 \cdot a7\ Fe_2O_3 \cdot b\ sulfate \cdot c\ halide \qquad \text{formula 1-5}$$

$$BaO \cdot a8\ SiO_2 \cdot b\ sulfate \cdot c\ halide \qquad \text{formula 1-6}$$

$$BaO \cdot a9\ Al_2O_3 \cdot b\ sulfate \cdot c\ halide \qquad \text{formula 1-7}$$

$$BaO \cdot a10\ Al_2O_3 \cdot a11\ SiO_2 \cdot b\ sulfate \cdot c\ halide \qquad \text{formula 1-8}$$

wherein $0 < a1 \leq 6$, $0 < a2 \leq 6$, $0 < a3 \leq 6$, $0 < a4 < 6$ and $0 < a5 < 6$, with $0 < a4 + a5 \leq 6$, $0 < a6 < 6$ and $0 < a7 < 6$, with $0 < a6 + a7 \leq 6$, $0 < a8 \leq 6$, $0 < a9 \leq 6$, $0 < a10 < 6$, $0 < a11 < 6$, with $0 < a10 + a11 \leq 6$, $0 \leq b \leq 4$, and $0 \leq c \leq 4$, the sulfate represents $CaSO_4$, $MgSO_4$, $BaSO_4$, $SrSO_4$, $ZnSO_4$, $Al_2(SO_4)_3$, $FeSO_4$, $Fe_2(SO_4)_3$, or a combination of two or more thereof, and the halide represents $CaCl_2$, $CaF_2$, or a combination thereof.

In any embodiment of the present application, b = 0.

In any embodiment of the present application, c = 0.

In any embodiment of the present application, b = 0 and c = 0.

In any embodiment of the present application, the hydraulic inorganic material comprises one or more of $2CaO \cdot SiO_2$, $3CaO \cdot SiO_2$, $CaO \cdot Al_2O_3$, $CaO \cdot 2Al_2O_3$, $3CaO \cdot Al_2O_3$, $6CaO \cdot 2Al_2O_3$, $12CaO \cdot 7Al_2O_3$, $CaO \cdot Fe_2O_3$, $2CaO \cdot Fe_2O_3$, $2CaO \cdot Al_2O_3 \cdot SiO_2$, $CaO \cdot Al_2O_3 \cdot 2SiO_2$, $4CaO \cdot Al_2O_3 \cdot Fe_2O_3$, $6CaO \cdot Al_2O_3 \cdot 2Fe_2O_3$, $3CaO \cdot 3Al_2O_3 \cdot CaSO_4$, $3CaO \cdot 3Al_2O_3 \cdot MgSO_4$, $3CaO \cdot 3Al_2O_3 \cdot BaSO_4$, $3CaO \cdot 3Al_2O_3 \cdot SrSO_4$, $3CaO \cdot 3Al_2O_3 \cdot ZnSO_4$, $3CaO \cdot 3Al_2O_3 \cdot Al_2(SO_4)_3$, $3CaO \cdot 3Al_2O_3 \cdot FeSO_4$, $3CaO \cdot 3Al_2O_3 \cdot Fe_2(SO_4)_3$, $2CaO \cdot SiO_2 \cdot CaSO_4$, $11CaO \cdot 7Al_2O_3 \cdot CaF_2$, $3CaO \cdot 3Al_2O_3 \cdot CaF_2$, $CaO \cdot 3Al_2O_3 \cdot 3CaF_2$, $CaO \cdot 3Al_2O_3 \cdot 4CaF_2$, $2BaO \cdot SiO_2$, $3BaO \cdot SiO_2$, $BaO \cdot Al_2O_3$, $3BaO \cdot Al_2O_3$, $BaO \cdot 6Al_2O_3$, $BaO \cdot Al_2O_3 \cdot SiO_2$, and $BaO \cdot Al_2O_3 \cdot 2SiO_2$.

Optionally, the hydraulic inorganic material comprises one or more of $2CaO \cdot SiO_2$, $3CaO \cdot SiO_2$, $3\ CaO \cdot Al_2O_3$, and $4CaO \cdot Al_2O_3 \cdot Fe_2O_3$.

In any embodiment of the present application, the hydraulic inorganic material is particles with a volume particle diameter Dv10 of 1 $\mu$m to 10 $\mu$m. Optionally, the hydraulic inorganic material is particles with a volume particle diameter Dv10 of 3 $\mu$m to 5 $\mu$m. When the volume particle size Dv10 of the hydraulic inorganic material particles is in an appropriate range, the consistency of the coating is higher.

In any embodiment of the present application, the mass percentage content of the hydraulic inorganic material is 95-100%, based on the total mass of the coating. Optionally, the mass percentage content of the hydraulic inorganic material is 97-100%.

In any embodiment of the present application, the coating further comprises additives, including one or more of a water-reducing admixture, gypsum, volcanic ash, fly ash, slag, quartz sand, limestone, and clay. The additives can function to adjust the compressive strength of the coating, adjust the condensation rate of the reaction of the coating with water, and reduce the heat of hydration.

In any embodiment of the present application, the mass percentage content of the additive is $\leq 5\%$, based on the total mass of the coating. Optionally, the mass percentage content of the additive is $\leq 3\%$.

In any embodiment of the present application, the total thickness of the coating is 0.5 $\mu$m to 5 $\mu$m. Optionally, the total thickness of the coating is 0.5 $\mu$m to 2 $\mu$m. When the total thickness of the coating is in an appropriate range, the coating can have an appropriate compressive strength upon reaction with water and also no excess release of heat upon reaction with water.

In any embodiment of the present application, the thickness of the base film is 5 $\mu$m to 12 $\mu$m. Optionally, the

thickness of the base film is 6 $\mu$m to 7 $\mu$m.

In any embodiment of the present application, the base film is selected from one or more of a polyolefin porous film, a non-woven fabric, and glass fibers.

In any embodiment of the present application, the heat of hydration within 2 days of the reaction of the coating with water is 300 J/g to 500 J/g. There will be an appropriate heat release when the coating reacts with water. This makes it possible to increase the transmission speed of active ions between the positive and negative electrodes of the battery, thereby improving the cycle performance and rate performance of the battery; moreover, it is ensured that the other electrochemical properties of the battery will not be affected.

In any embodiment of the present application, the compressive strength of the coating after reaction with water and hardening is 2500 Pa to 20000 Pa. Optionally, the compressive strength of the coating after reaction with water and hardening is 2500 Pa to 10000 Pa. The coating has a relatively high compressive strength upon reaction with water, making the separator less likely to deform during battery formation and charge-discharge cycling, thereby effectively inhibiting the collapse of the central hole and the growth of dendrites, thus improving the safety performance of the battery and prolonging the cycle life of the battery.

According to the invention, the coating is located in a region from 0 cm to L cm from a winding start end of the separator, with $10 \leq L \leq 20$. The coating containing the hydraulic inorganic material is only provided in a partial area of a winding start end of the separator, so that the collapse of the central hole and the growth of dendrites can be effectively inhibited, without significantly reducing the mass energy density of the battery.

A second aspect of the present application provides a battery including an electrode assembly and an electrolyte solution, wherein the electrode assembly is the electrode assembly of a battery according to the first aspect of the present application, and the electrolyte solution comprises an electrolyte salt and water.

Since water is used as the solvent in the electrolyte solution of the present application, after the coating containing the hydraulic inorganic material is soaked in the electrolyte solution, the hydraulic inorganic material in the coating can react with the solvent water and cause the coating to be fully hardened, thereby significantly increasing the strength of the separator. Therefore, the separator is less likely to deform during battery formation and charge-discharge cycling, thereby effectively inhibiting the collapse of the central hole and the growth of dendrites, thus improving the safety performance of the battery and prolonging the cycle life of the battery.

In any embodiment of the present application, the battery is a lithium ion battery, a sodium ion battery, a potassium ion battery, a zinc ion battery, a calcium ion battery, a magnesium ion battery, an aluminum ion battery, or a mixed ion battery.

A third aspect of the present application provides a battery module comprising the battery of the second aspect of the present application.

A fourth aspect of the present application provides a battery pack comprising one of the battery of the second aspect and the battery module of the third aspect of the present application.

A fifth aspect of the present application provides a powered device comprising at least one of the battery of the second aspect, the battery module of the third aspect, and the battery pack of the fourth aspect of the present application.

The battery module, battery pack and powered device of the present application include the battery provided by the present application, and thus have at least the same advantages as the battery.

Brief Description of the Drawings

In order to more clearly illustrate the technical solution of the embodiments of the present application, the following will briefly introduce the accompanying drawings to be used in the description of the embodiments of the present application. Obviously, the drawings described below are only some embodiments of the present application, and for those of ordinary skill in the art, other drawings can also be obtained in accordance with the drawings without involving any inventive effort.

Figure 1 is a schematic diagram of a center hole of a cylindrical battery before and after collapse.
Figure 2 is a schematic diagram of an embodiment of a powered device comprising the battery of the present application as a power source.

Detailed Description of Embodiments

Hereinafter, embodiments that specifically disclose the electrode assembly, battery, battery module, battery pack, and powered device of the present application are described in detail with reference to the accompanying drawings as appropriate. However, there are cases where unnecessary detailed descriptions are omitted. For example, there are cases where detailed descriptions of well-known items and repeated descriptions of actually identical structures are omitted. This is to prevent the following description from becoming unnecessarily lengthy to facilitate understanding by those skilled in the art. In addition, the accompanying drawings and the following descriptions are provided for those skilled in the art to fully understand the present application, and are not intended to limit the subject matter described in the claims.

The "ranges" disclosed in the present application are defined in the form of lower and upper limits, and a given range is defined by selecting lower and upper limits that define the boundaries of the particular range. Ranges defined in this manner may or may not be inclusive of the endpoints, and may be arbitrarily combined, that is, any lower limit may be combined with any upper limit to form a range. For example, if the ranges of 60-120 and 80-110 are listed for a particular parameter, it is to be understood that the ranges of 60-110 and 80-120 are also expected. Additionally, if the minimum range values 1 and 2 and the maximum range values 3, 4, and 5 are listed, the following ranges are all expected: 1-3, 1-4, 1-5, 2-3, 2-4 and 2-5. In the present application, unless otherwise stated, the numerical range "a-b" refers to an abbreviated representation of any combination of real numbers between a and b, wherein both a and b are real numbers. For example, the numerical range "0-5" means that all real numbers between "0-5" have been listed herein, and "0-5" is just an abbreviated representation of these numerical combinations. In addition, when a parameter is expressed as an integer greater than or equal to 2, it is equivalent to disclosing that the parameter is an integer such as 2, 3, 4, 5, 6, 7, 8, 9, 10, 11, or 12.

Unless otherwise specified, all the steps of the present application can be performed sequentially or randomly, preferably sequentially. For example, where the method includes steps (a) and (b), it is meant that the method may include steps (a) and (b) performed in sequence, or may also include steps (b) and (a) performed in sequence. For example, the described method may also include step (c), meaning that step (c) may be added to the method in any order, e.g., the method may include steps (a), (b) and (c), or may also include steps (a), (c) and (b), or may also include steps (c), (a) and (b), etc.

Unless otherwise specified, the terms "comprise" and "include" mentioned in the present application mean open-ended or closed-ended. For example, the terms "comprise" and "include" may mean that other components not listed may also be comprised or included, or only the listed components may be comprised or included.

Unless otherwise specified, in this application, the term "or" is inclusive. For example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

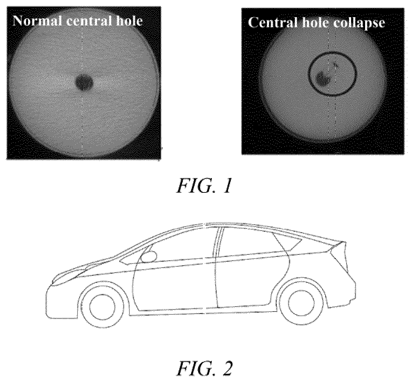

Figure 1 is a schematic diagram of a center hole of a cylindrical battery before and after collapse. As shown in Figure 1, the central part of the cylindrical battery has a central hole, and the central hole easily collapses during the battery formation and cyclic charge-discharge process. After the central hole collapses, the internal gap of the battery increases (for example, the gap between the positive electrode piece and the negative electrode piece increases), which causes easy growth of dendrites, affecting the safety performance of the battery and also reducing the cycle life of the battery. The collapse of the central hole is affected by factors such as the gas production rate during battery formation, the coating weight on the electrode piece, the thickness of the current collector, the rebound rate of the electrode piece. Generally, the larger the coating weight on the electrode piece, the higher the gas production rate during battery formation, and the more easily the central hole collapses; and the thinner the thickness of the current collector, the higher the rebound rate of the electrode piece, and the more easily the central hole collapses. Therefore, increasing the bearing capacity of the electrode piece and the separator in the local area of the central hole makes the central hole less easily deform, and can achieve the effect of suppressing the collapse of the central hole. In the prior art, the hardness of the separator can be increased to a certain extent by providing a ceramic coating on the surface of the base film of the separator; however, the hardness of the separator is still relatively low and cannot effectively suppress the collapse of the central hole.

Based on the above problems, the inventors have improved the structure of the separator and proposed an electrode assembly and a battery, which can effectively suppress the collapse of the central hole.

## Electrode assembly and battery

The battery of the present application comprises a casing, an electrode assembly, an end cap and an electrolyte solution, wherein the electrode assembly is arranged in the casing, the end cap is capped on the casing, and the electrolyte solution infiltrates the electrode assembly and functions to conduct active ions between the positive electrode and the negative electrode. The electrolyte solution comprises an electrolyte salt and water, wherein the type of the electrolyte salt is not specifically limited and can be selected according to actual needs. The material of the casing is not particularly limited, for example, it can be a hard plastic shell, an aluminum shell, a steel shell, etc.

It should be noted that the battery of the present application can be a lithium ion battery, a sodium ion battery, a potassium ion battery, a zinc ion battery, a calcium ion battery, a magnesium ion battery, an aluminum ion battery, or a mixed ion battery. In the present application, the term "mixed ion battery" refers to a battery in which the deintercalation reactions of two or more active ions are present between the positive and negative electrodes of the battery. Generally, the electrolyte solution of a mixed ion battery contains two or more active ions, for example, including two or more of lithium ions, sodium ions, potassium ions, zinc ions, calcium ions, magnesium ions, and aluminum ions. By way of example, the mixed ion battery may include a lithium-sodium mixed ion battery, a sodium-zinc mixed ion battery, a sodium-potassium mixed ion battery, etc.

The electrode assembly of the present application comprises a first electrode piece, a second electrode piece with opposite polarity to the first electrode piece, and a separator arranged between the first electrode piece and the second electrode piece; the electrode assembly is obtained by winding the first electrode piece, the second electrode piece and the separator; and the separator comprises a base film and a coating provided on at least part of the surface of the base film, and the coating comprises a hydraulic inorganic material capable of hardening upon reaction with water.

The inventors have unexpectedly found that by means of providing a coating containing the hydraulic inorganic material on the surface of the base film and the utilization of the principle that the hydraulic inorganic material can harden upon reaction with water, the strength of the separator can be significantly increased, making it less likely to deform during battery formation and charge-discharge cycling, thereby effectively inhibiting the collapse of the central hole and the growth of dendrites, thus improving the safety performance of the battery and prolonging the cycle life of the battery.

Since water is used as the solvent in the electrolyte solution of the present application, after the coating containing the hydraulic inorganic material is soaked in the electrolyte solution, the hydraulic inorganic material in the coating can react with the solvent water and cause the coating to be fully hardened, thereby significantly increasing the strength of the separator. Therefore, the separator is less likely to deform during battery formation and charge-discharge cycling, thereby effectively inhibiting the collapse of the central hole and the growth of dendrites, thus improving the safety performance of the battery and prolonging the cycle life of the battery.

The electrode assembly of the present application is a wound electrode assembly, and the shape of an end face of the electrode assembly is not specifically limited and can be selected according to actual needs. For example, the end face of the electrode assembly may have a regular shape such as a circle, an ellipse, or a rectangle, and the end face of the electrode assembly may also have an irregular shape.

In some embodiments, the hydraulic inorganic material includes at least one compound represented by formula 1.

First oxide·a second oxide·b sulfate·c halide                formula 1

In formula 1, $0 < a \leq 6$, $0 \leq b \leq 4$, and $0 \leq c \leq 4$; the first oxide represents $CaO$ or $BaO$; the second oxide represents component 1, component 2, or a combination thereof, wherein component 1 represents $SiO_2$, $Al_2O_3$, $Fe_2O_3$, or a combination of two or more thereof, and component 2 represents $FeO$, $MgO$, $BaO$, $K_2O$, $Na_2O$, $TiO_2$, $CuO$, $Cr_2O_3$, $P_2O_5$, $SO_3$, or a combination of two or more thereof; the sulfate represents $CaSO_4$, $MgSO_4$, $BaSO_4$, $SrSO_4$, $ZnSO_4$, $Al_2(SO_4)_3$, $FeSO_4$, $Fe_2(SO_4)_3$, or a combination of two or more thereof; and the halide represents $CaCl_2$, $CaF_2$, or a combination thereof.

The reaction product from the compound represented by formula 1 and water includes one or more of a gel, a hydrate, $Ca(OH)_2$, etc., and the compound represented by formula 1 can have appropriate compressive strength and also no excess release of heat upon reaction with water Therefore, the above compound represented by formula 1 can effectively inhibit the collapse of the central hole and the growth of dendrites, without significantly affecting the electrochemical performance of the battery.

In some embodiments, the weight ratio of component 1 to component 2 is (95-100) : (0-5). When the weight ratio of component 1 to component 2 is in an appropriate range, it is beneficial to adjust the compressive strength and heat of hydration of the coating, so that the coating can have an appropriate compressive strength upon reaction with water and also no excess release of heat upon reaction with water.

In some embodiments, the second oxide represents component 1 only.

In some embodiments, b = 0.

In some embodiments, $0 < b \leq 4$. The content of the sulfate is moderate, which is beneficial to adjust the compressive strength and heat of hydration of the coating, so that the coating can have an appropriate compressive strength upon reaction with water and also no excess of release of heat upon reaction with water.

In some embodiments, c = 0.

In some embodiments, $0 < c \leq 4$. The content of the halide is moderate, which is beneficial to adjust the compressive strength and heat of hydration of the coating, so that the coating can have an appropriate compressive strength upon reaction with water and also no excess of release of heat upon reaction with water.

In some embodiments, b = 0, and c = 0.

The compound represented by formula 1 can be prepared according to a conventional method in the art, such as a high-temperature solid-phase reaction method. An exemplary preparation method involves: uniformly mixing a Ca source or a Ba source, a precursor of the element M1, optional $SO_3$, an optional halogen precursor, etc. at a certain molar ratio, and subjecting the mixture to high-temperature calcination to obtain the compound represented by formula 1. M1 is selected from one or more of Si, Al, Fe, K, Na, Mg, Ba, Ti, Cu, Cr, Sr, Zn, etc. Optionally, the calcination temperature is 800°C to 1600°C.

By way of example, the Ca source includes, but is not limited to, one or more of $CaO$, $CaCO_3$, and $Ca(OH)_2$. By

way of example, the Ba source includes, but is not limited to, one or more of $BaO$, $BaCO_3$, and $Ba(OH)_2$. By way of example, the precursor of the element M1 includes, but is not limited to, one or more of oxides, hydroxide compounds, sulfuric acid compounds, hydrochloric acid compounds, nitric acid compounds, carbonic acid compounds and acetic acid compounds of the element M1. For example, the precursor of the element M1 is one or more of $SiO_2$, $Al(OH)_3$, $Al_2O_3$, $Fe_2O_3$, $FeO$, $K_2O$, $Na_2O$, $MgO$, $BaO$, $TiO_2$, $CuO$, $Cr_2O_3$, $SrO$, and $ZnO$. By way of example, halogen precursors include but are not limited to one or more of ammonium fluoride, hydrogen fluoride, ammonium chloride, and hydrogen chloride.

In some embodiments, the hydraulic inorganic material comprises a compound represented by formula 1-1, wherein the sulfate and the halide are as defined herein.

$$CaO \cdot a1\ SiO_2 \cdot b\ sulfate \cdot c\ halide \qquad formula\ 1\text{-}1$$

In formula 1-1, $0 < a1 \leq 6$, $0 \leq b \leq 4$, and $0 \leq c \leq 4$.
Optionally, $0 < a1 \leq 3$, $b = 0$, and $c = 0$.
Optionally, $0 < a1 \leq 3$, $0 < b \leq 4$, and $c = 0$.
Optionally, $0 < a1 \leq 3$, $b = 0$, and $0 < c \leq 4$.
In some embodiments, the hydraulic inorganic material comprises a compound represented by formula 1-2, wherein the sulfate and the halide are as defined herein.

$$CaO \cdot a2\ Al_2O_3 \cdot b\ sulfate \cdot c\ halide \qquad formula\ 1\text{-}2$$

In formula 1-2, $0 < a2 \leq 6$, $0 \leq b \leq 4$, and $0 \leq c \leq 4$.
Optionally, $0 < a2 \leq 3$, $b = 0$, and $c = 0$.
Optionally, $0 < a2 \leq 3$, $0 < b \leq 4$, and $c = 0$.
Optionally, $0 < a2 \leq 3$, $b = 0$, and $0 < c \leq 4$.
In some embodiments, the hydraulic inorganic material comprises a compound represented by formula 1-3, wherein the sulfate and the halide are as defined herein.

$$CaO \cdot a3\ Fe_2O_3 \cdot b\ sulfate \cdot c\ halide \qquad formula\ 1\text{-}3$$

In formula 1-3, $0 < a3 \leq 6$, $0 \leq b \leq 4$, and $0 \leq c \leq 4$.
Optionally, $0 < a3 \leq 3$, $b = 0$, and $c = 0$.
Optionally, $0 < a3 \leq 3$, $0 < b \leq 4$, and $c = 0$.
Optionally, $0 < a3 \leq 3$, $b = 0$, and $0 < c \leq 4$.
In some embodiments, the hydraulic inorganic material comprises a compound represented by formula 1-4, wherein the sulfate and the halide are as defined herein.

$$CaO \cdot a4\ Al_2O_3 \cdot a5\ SiO_2 \cdot b\ sulfate \cdot c\ halide \qquad formula\ 1\text{-}4$$

In formula 1-4, $0 < a4 < 6$, $0 < a5 < 6$, with $0 < a4 + a5 \leq 6$, $0 \leq b \leq 4$, and $0 \leq c \leq 4$.
Optionally, $0 < a4 \leq 2$, $0 < a5 \leq 2$, with $0 < a4 + a5 \leq 3$, $b = 0$, and $c = 0$.
Optionally, $0 < a4 \leq 2$, $0 < as \leq 2$, with $0 < a4 + a5 \leq 3$, $0 < b \leq 4$, and $c = 0$.
Optionally, $0 < a4 \leq 2$, $0 < a5 \leq 2$, with $0 < a4 + a5 \leq 3$, $b = 0$, and $0 < c \leq 4$.
In some embodiments, the hydraulic inorganic material comprises a compound represented by formula 1-5, wherein the sulfate and the halide are as defined herein.

$$CaO \cdot a6\ Al_2O_3 \cdot a7\ Fe_2O_3 \cdot b\ sulfate \cdot c\ halide \qquad formula\ 1\text{-}5$$

In formula 1-5, $0 < a6 < 6$, $0 < a7 < 6$, with $0 < a6 + a7 \leq 6$, $0 \leq b \leq 4$, and $0 \leq c \leq 4$.
Optionally, $0 < a6 \leq 2$, $0 < a7 \leq 2$, with $0 < a6 + a7 \leq 3$, $b = 0$, and $c = 0$.
Optionally, $0 < a6 \leq 2$, $0 < a7 \leq 2$, with $0 < a6 + a7 \leq 3$, $0 < b \leq 4$, and $c = 0$.
Optionally, $0 < a6 \leq 2$, $0 < a7 \leq 2$, with $0 < a6 + a7 \leq 3$, $b = 0$, and $0 < c \leq 4$.
In some embodiments, the hydraulic inorganic material comprises a compound represented by formula 1-6, wherein the sulfate and the halide are as defined herein.

$$BaO \cdot a8\ SiO_2 \cdot b\ sulfate \cdot c\ halide \qquad formula\ 1\text{-}6$$

In formula 1-6, $0 < a8 \leq 6$, $0 \leq b \leq 4$, and $0 \leq c \leq 4$.
Optionally, $0 < a8 \leq 3$, $b = 0$, and $c = 0$.

Optionally, $0 < a8 \leq 3$, $0 < b \leq 4$, and $c = 0$.

Optionally, $0 < a8 \leq 3$, $b = 0$, and $0 < c \leq 4$.

In some embodiments, the hydraulic inorganic material comprises a compound represented by formula 1-7, wherein the sulfate and the halide are as defined herein.

$$BaO \cdot a9\ Al_2O_3 \cdot b\ \text{sulfate} \cdot c\ \text{halide} \qquad \text{formula 1-7}$$

In formula 1-7, $0 < a9 \leq 6$, $0 \leq b \leq 4$, and $0 \leq c \leq 4$.

Optionally, $0 < a9 \leq 6$, $b = 0$, and $c = 0$.

Optionally, $0 < a9 \leq 6$, $0 < b \leq 4$, and $c = 0$.

Optionally, $0 < a9 \leq 6$, $b = 0$, and $0 < c \leq 4$.

In some embodiments, the hydraulic inorganic material comprises a compound represented by formula 1-8, wherein the sulfate and the halide are as defined herein.

$$BaO \cdot a10\ Al_2O_3 \cdot a11\ SiO_2 \cdot b\ \text{sulfate} \cdot c\ \text{halide} \qquad \text{formula 1-8}$$

In formula 1-8, $0 < a10 < 6$, $0 < a11 < 6$, with $0 < a10 + a11 \leq 6$, $0 \leq b \leq 4$, and $0 \leq c \leq 4$.

Optionally, $0 < a10 \leq 2$, $0 < a11 \leq 2$, with $0 < a11 + a11 \leq 3$, $b = 0$, and $c = 0$.

Optionally, $0 < a10 \leq 2$, $0 < a11 \leq 2$, with $0 < a11 + a11 \leq 3$, $0 < b \leq 4$, and $c = 0$.

Optionally, $0 < a10 \leq 2$, $0 < a11 \leq 2$, with $0 < a11 + a11 \leq 3$, $b = 0$, and $0 < c \leq 4$.

In some embodiments, the hydraulic inorganic material comprises two or more of the compounds represented by formulas 1-1 to 1-8. In this regard, it is beneficial to adjust the compressive strength and heat of hydration of the coating, so that the coating can have an appropriate compressive strength upon reaction with water and also no excess release of heat upon reaction with water.

In some embodiments, by way of example, the hydraulic inorganic material comprises one or more of $2CaO \cdot SiO_2$, $3CaO \cdot SiO_2$, $CaO \cdot Al_2O_3$, $CaO \cdot 2Al_2O_3$, $3CaO \cdot Al_2O_3$, $6CaO \cdot 2Al_2O_3$, $12CaO \cdot 7Al_2O_3$, $CaO \cdot Fe_2O_3$, $2CaO \cdot Fe_2O_3$, $2CaO \cdot Al_2O_3 \cdot SiO_2$, $CaO \cdot Al_2O_3 \cdot 2SiO_2$, $4CaO \cdot Al_2O_3 \cdot Fe_2O_3$, $6CaO \cdot Al_2O_3 \cdot 2Fe_2O_3$, $3CaO \cdot 3Al_2O_3 \cdot CaSO_4$, $3CaO \cdot 3Al_2O_3 \cdot MgSO_4$, $3CaO \cdot 3Al_2O_3 \cdot BaSO_4$, $3CaO \cdot 3Al_2O_3 \cdot SrSO_4$, $3CaO \cdot 3Al_2O_3 \cdot ZnSO_4$, $3CaO \cdot 3Al_2O_3 \cdot Al_2(SO_4)_3$, $3CaO \cdot 3Al_2O_3 \cdot FeSO_4$, $3CaO \cdot 3Al_2O_3 \cdot Fe_2(SO_4)_3$, $2CaO \cdot SiO_2 \cdot CaSO_4$, $11CaO \cdot 7Al_2O_3 \cdot CaF_2$, $3CaO \cdot 3Al_2O_3 \cdot CaF_2$, $CaO \cdot 3Al_2O_3 \cdot 3CaF_2$, $CaO \cdot 3Al_2O_3 \cdot 4CaF_2$, $2BaO \cdot SiO_2$, $3BaO \cdot SiO_2$, $BaO \cdot Al_2O_3$, $3BaO \cdot Al_2O_3$, $BaO \cdot 6Al_2O_3$, $BaO \cdot Al_2O_3 \cdot SiO_2$, and $BaO \cdot Al_2O_3 \cdot 2SiO_2$.

Optionally, the hydraulic inorganic material comprises one or more of $2CaO \cdot SiO_2$, $3CaO \cdot SiO_2$, $3\ CaO \cdot Al_2O_3$, and $4CaO \cdot Al_2O_3 \cdot Fe_2O_3$.

In some embodiments, the hydraulic inorganic material is particles with a volume particle diameter Dv10 of 1 μm to 10 μm. For example, the volume particle diameter Dv10 of the hydraulic inorganic material particles is 1 μm, 2 μm, 3 μm, 4 μm, 5 μm, 6 μm, 7 μm, 8 μm, 9 μm, 10 μm, or a range formed by any of the above numerical values. Optionally, the hydraulic inorganic material is particles with a volume particle diameter Dv10 of 3 μm to 5 μm. When the volume particle size Dv10 of the hydraulic inorganic material particles is in an appropriate range, the consistency of the coating is higher.

In some embodiments, the mass percentage content of the hydraulic inorganic material is 95-100%, based on the total mass of the coating. Optionally, the mass percentage content of the hydraulic inorganic material is 97-100%.

In some embodiments, the coating further comprises additives, and the additives can function to adjust the compressive strength of the coating, adjust the condensation rate of the reaction of the coating with water, and reduce the heat of hydration. By way of example, the additives include, but are not limited to, one or more of water-reducing admixture, gypsum, volcanic ash, fly ash, slag, quartz sand, limestone, and clay. Among them, gypsum includes one or more of natural dihydrate gypsum, anhydrite, hemihydrate gypsum, phosphogypsum, and desulfurized gypsum. The types of the additives are not specifically limited and can be selected according to actual needs. For example, by way of example, the water-reducing admixture may be a polycarboxylate water-reducing admixture. These additives may be used alone or in combination of two or more. Based on the total mass of the coating, the mass percentage content of the additives is $\leq 5\%$. For example, the mass percentage content of the additives is $\leq 4.5\%$, $\leq 4\%$, $\leq 3.5\%$, $\leq 3\%$, $\leq 2.5\%$, $\leq 2\%$, $\leq 1.5\%$, $\leq 1\%$, or $\leq 0.5\%$, or is 0%.

In some embodiments, the thickness of the base film is 5 μm to 12 μm. Optionally, the thickness of the base film is 6 μm to 7 μm. When the thickness of the base film is within an appropriate range, the separator can have a relatively high ionic conductivity while having a sufficient compressive strength.

In some embodiments, the porosity of the base film is 30-50%. Optionally, the porosity of the base film is 35-50%. When the porosity of the base film is within an appropriate range, the separator can have a relatively high ionic conductivity while having a sufficient compressive strength.

In some embodiments, the type of the base film is not particularly limited, and any well-known porous structure film with good chemical stability and mechanical stability can be selected. Optionally, the base film is selected from one or more of a polyolefin porous film, a non-woven fabric, and glass fibers. The base film may be a single-layer film, or may also be a multi-layer composite film. When the base film is a multi-layer composite film, the materials of the layers are the same or different. By way of example, the material of the base film can be selected from one or more of polyethylene, polypropylene, polyimide, polyvinylidene fluoride, a vinylidene fluoride-hexafluoropropylene copolymer, polyamide, and polyethylene terephthalate.

The base film has two surfaces opposite in its thickness direction, and the coating is provided on any one or both of the two surfaces of the base film.

In some embodiments, the total thickness of the coating is 0.5 $\mu$m to 5 $\mu$m. In the present application, the term "total thickness of the coating" refers to the sum of the thicknesses of coatings provided on both surfaces of the base film. When the coating is provided on any one of the two surfaces of the base film, the thickness of the coating is the total thickness of the coatings; and when the coating is provided on both of the two surfaces of the base film, the sum of the thicknesses of the coatings is the total thickness of the coatings.

For example, the total thickness of the coating is 0.5 $\mu$m, 1.0 $\mu$m, 1.5 $\mu$m, 2.0 $\mu$m, 2.5 $\mu$m, 3.0 $\mu$m, 3.5 $\mu$m, 4.0 $\mu$m, 4.5 $\mu$m, or 5.0 $\mu$m, or a range formed by any of the above numerical values. Optionally, the total thickness of the coating is 0.5 $\mu$m to 2 $\mu$m. When the total thickness of the coating is in an appropriate range, the coating can have an appropriate compressive strength upon reaction with water and does not release excess heat upon reaction with water.

In some embodiments, the heat of hydration within 2 days of the reaction of the coating with water is 300 J/g to 500 J/g. For example, the heat of hydration within 2 days of the reaction of the coating with water is 300 J/g, 310 J/g, 320 J/g, 330 J/g, 340 J/g, 350 J/g, 360 J/g, 370 J/g, 380 J/g, 390 J/g, 400 J/g, 410 J/g, 420 J/g, 430 J/g, 440 J/g, 450 J/g, 460 J/g, 470 J/g, 480 J/g, 490 J/g, or 500 J/g, or a range formed by any of the above numerical values. By adjusting the composition, thickness, etc. of the coating, the coating can have an appropriate heat release upon reaction with water. This makes it possible to increase the transmission speed of active ions between the positive and negative electrodes of the battery, thereby improving the cycle performance and rate performance of the battery; moreover, it is ensured that the other electrochemical properties of the battery will not be affected.

In some embodiments, the compressive strength of the coating after reaction with water and hardening is 2500 Pa to 20000 Pa. For example, the compressive strength of the coating after reaction with water and hardening is 2500 Pa, 3000 Pa, 4000 Pa, 5000 Pa, 6000 Pa, 7000 Pa, 8000 Pa, 9000 Pa, 10000 Pa, 11000 Pa, 12000 Pa, 13000 Pa, 14000 Pa, 15000 Pa, 16000 Pa, 17000 Pa, 18000 Pa, 19000 Pa, 20000 Pa, or a range formed by any of the above numerical values. Optionally, the compressive strength of the coating after reaction with water and hardening is 2500 Pa to 18000 Pa, 2500 Pa to 16000 Pa, 2500 Pa to 14000 Pa, 2500 Pa to 12000 Pa, 2500 Pa to 10000 Pa, 2500 Pa to 9000 Pa, 2500 Pa to 8000 Pa, 2500 Pa to 7000 Pa, 2500 Pa to 6000 Pa, or 2500 Pa to 5000 Pa. By adjusting the composition, thickness, etc. of the coating, the coating can have a relatively high compressive strength upon reaction with water, making the separator less likely to deform during battery formation and charge-discharge cycling, thereby effectively inhibiting the collapse of the central hole and the growth of dendrites, thus improving the safety performance of the battery and prolonging the cycle life of the battery.

The heat of hydration has a well-known meaning in the art, and can be measured by instruments and methods known in the art. For example, the heat of hydration of the coating is measured using a TAM Air thermal activity microcalorimeter (from TA Instruments, USA). An exemplary test method is as follows: a freshly prepared separator is taken for testing, a sample is taken from a coating in any area of a separator (for example, the sample is taken by powder scraping using a razor blade), and the mass of the entire collected sample is weighed; and the entire collected sample is put into an ampoule, metered water is drawn with a syringe on an electric stirrer, the electric stirrer is then inserted into the ampoule, the electric stirrer and the ampoule are then placed together in a measuring position of a microcalorimeter, the water in the syringe is finally poured into the ampoule, and stirring and recording are started to obtain the total heat release during the test period. In this method, the test period is 48 hours and the test temperature is room temperature.

The compressive strength has a well-known meaning in the art, and can be measured by instruments and methods known in the art. When testing, the separator sample can be taken directly from a freshly prepared separator or from a battery.

When a freshly prepared separator is taken for testing, an exemplary test method is as follows: a freshly prepared single-side-coated separator sample is taken for testing, and if the separator is double-side-coated, the coating on one side can be wiped off first; the separator is placed in deionized water to make the coating fully react with water and harden; and the separator is taken out of deionized water, fully dried and then placed in a compressive strength tester (for example, YN-200-400 microcomputer compressive strength tester) for testing to obtain the failure load when the separator is ruptured. Optionally, the loading speed is 0.4 MPa/s to 0.6 MPa/s.

When the separator is obtained from a battery, an exemplary test method is as follows: after the battery is fully discharged, the separator is disassembled, and a fully hardened area at a winding start end is taken for testing, and if the separator is double-side-coated, the coating on one side can be wiped off first; and the separator is placed in an oven, fully dried (for example, at 45°C, 30 min) to remove excess electrolyte solution, and then placed in a compressive strength tester (for example, YN-200-400 microcomputer compressive strength tester) for testing to obtain the failure load when the separator is ruptured. Optionally, the loading speed is 0.4 MPa/s to 0.6 MPa/s.

The compressive strength of the coating after reaction with water and hardening is calculated according to the formula p = P/A, where p represents the compressive strength of the sample, P represents the failure load of the sample, and A represents the area of the sample.

According to the invention, the coating is located in a region from 0 cm to L cm from a winding start end of the separator, with $10 \leq L \leq 20$. The coating containing the hydraulic inorganic material is only provided in partial area of a winding start end of the separator, so that the collapse of the central hole and the growth of dendrites can be effectively inhibited, without significantly reducing the mass energy density of the battery. Therefore, the electrode assembly of the present application can have both a high safety performance and a high energy density.

The separator can be prepared according to a conventional method in the art. An exemplary preparation method is as follows: a hydraulic inorganic material and optional additives are dissolved in an organic solvent and fully stirred and mixed to form a uniform coating slurry; and the coating slurry is applied on the surface of a base film and dried to obtain the separator. In this method, the type of the organic solvent is not specifically limited and can be selected according to actual needs. For example, the organic solvent is selected from dimethyl carbonate, diethyl carbonate, ethyl methyl carbonate, etc.

In some embodiments, the pH of the electrolyte solution is 5-9. Optionally, the pH of the electrolyte solution is 7.

In some embodiments, the concentration of the electrolyte salt may be 0.5 mol/L to 2.0 mol/L. Optionally, the concentration of the electrolyte salt is 1.0 mol/L.

In some embodiments, by way of example, the electrolyte salt includes, but is not limited to, one or more of $Li_2SO_4$, $LiNO_3$, $LiCl$, $LiCF_3SO_3$, $Na_2SO_4$, $NaNO_3$, $NaCl$, $NaCF_3SO_3$, $K_2SO_4$, $KNO_3$, $KCl$, $KCF_3SO_3$, $ZnSO_4$, $Zn(NO_3)_2$, $ZnCl_2$, $Zn(CF_3SO_3)_2$, $Ca(NO_3)_2$, $CaCl_2$, $Ca(CF_3SO_3)_2$, $MgSO_4$, $Mg(NO_3)_2$, $MgCl_2$, $Mg(CF_3SO_3)_2$, $Sr(NO_3)_2$, $SrCl_2$, $Sr(CF_3SO_3)_2$, $Ba(NO_3)_2$, $BaCl_2$, $Ba(CF_3SO_3)_2$, $Al_2(SO_4)_3$, $Al(NO_3)_3$, $AlCl_3$, and $Al(CF_3SO_3)_3$.

In some embodiments, the electrolyte solution further optionally contains additives. For example, the additives can include negative electrode film-forming additives, or may also include positive electrode film-forming additives, and can also include additives that can improve certain battery performance, such as additives that improve the overcharge performance of a battery, additives that improve the high-temperature performance of a battery, and additives that improve the low-temperature performance of a battery.

In some embodiments, the first electrode piece is a positive electrode piece, and the second electrode piece is a negative electrode piece. In some embodiments, the first electrode piece is a negative electrode piece, and the second electrode piece is a positive electrode piece.

The positive electrode piece may include a positive electrode current collector and a positive electrode film layer provided on at least one surface of the positive electrode current collector. By way of example, the positive electrode current collector has two surfaces opposite in its thickness direction, and the positive electrode film layer is provided on any one or both of the two surfaces of the positive electrode current collector.

The positive electrode film layer generally includes a positive electrode active material, an optional conductive agent and an optional binder, and the positive electrode film layer is generally formed by applying a positive electrode slurry on the positive electrode current collector, followed by drying and cold pressing. The positive electrode slurry is generally formed by dispersing the positive electrode active material, an optional conductive agent, an optional binder and any other components in a solvent and uniformly stirring same. The solvent may be, without limitation, deionized water, N-methylpyrrolidone (NMP). By way of example, the binder for the positive electrode film layer includes one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a fluorine-containing acrylate resin, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). By way of example, the conductive agent used for the positive electrode film layer includes one or more of superconducting carbon, conductive graphite, acetylene black, carbon black, Ketjen black, carbon dots, carbon nanotubes, graphene, and carbon nanofibers.

The positive electrode current collector can be a metal foil or a composite current collector. As an example of the metal foil, an aluminum foil may be used as the positive electrode current collector. The composite current collector may include a polymeric material base layer and a metal material layer formed on at least one surface of the polymeric material base layer. By way of example, the metal material may be selected from one or more of aluminum, an aluminum alloy, nickel, a nickel alloy, titanium, a titanium alloy, silver, and a silver alloy. By way of example, the polymeric material base layer may be selected from polypropylene (PP), polyethylene terephthalate (PET), polybutylene terephthalate (PBT), polystyrene (PS), polyethylene (PE), etc.

The negative electrode piece includes a negative electrode current collector and a negative electrode film sheet provided on at least one surface of the negative electrode current collector. By way of example, the negative electrode current collector has two surfaces opposite in its thickness direction, and the negative electrode film sheet is provided on any one or both of the two surfaces of the negative electrode current collector.

The negative electrode film layer generally includes a negative electrode active material, an optional binder, an optional conductive agent and additional optional auxiliaries, and the negative electrode film layer is generally formed by applying a negative electrode slurry on the negative electrode current collector, followed by drying and cold pressing. The negative electrode slurry is generally formed by dispersing the negative electrode active material, an optional conductive agent, an optional binder and any other components in a solvent and uniformly stirring same. The solvent may be, without limitation, deionized water, N-methylpyrrolidone (NMP). By way of example, the binder for the negative electrode film layer includes one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a fluorine-containing acrylate resin, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). By way of example, the conductive agent used for the negative electrode film layer includes one or more of superconducting carbon, conductive graphite, acetylene black, carbon black, Ketjen black, carbon dots, carbon nanotubes, graphene, and carbon nanofibers. By way of example, the additional auxiliaries used for the negative electrode film layer include a thickener, for example, sodium carboxymethyl cellulose (CMC-Na).

The negative electrode current collector may be a metal foil or a composite current collector. As an example of the metal foil, a copper foil may be used. The composite current collector may include a polymeric material base layer and a metal material layer formed on at least one surface of the polymeric material base layer. By way of example, the metal material may be selected from one or more of copper, a copper alloy, nickel, a nickel alloy, titanium, a titanium alloy, silver, and a silver alloy. By way of example, the polymeric material base layer may be selected from polypropylene (PP), polyethylene terephthalate (PET), polybutylene terephthalate (PBT), polystyrene (PS), polyethylene (PE), etc.

The positive electrode active material and the negative electrode active material may be materials known in the art for lithium ion batteries, sodium ion batteries, potassium ion batteries, zinc ion batteries, calcium ion batteries, magnesium ion batteries, aluminum ion batteries, or mixed ion batteries.

The positive electrode active material is selected from materials in which the intercalation potential of active ions (e.g., lithium ions, sodium ions, potassium ions, zinc ions, calcium ions, magnesium ions, aluminum ions, etc.) is lower than the oxygen evolution potential of water. The negative electrode active material is selected from materials in which the intercalation potential of active ions (e.g., lithium ions, sodium ions, potassium ions, zinc ions, calcium ions, magnesium ions, aluminum ions, etc.) is higher than the oxygen evolution potential of water.

By way of example, the positive electrode active material includes one or more of transition metal oxide materials, polyanionic materials (e.g., olivine structure, NASICON structure, Maricite structure, pyrophosphate, fluorophosphate, sulfate, etc.), Prussian blue materials, organic polymeric materials, and respective modified compounds thereof. Examples of the transition metal oxide materials may include but are not limited to $Na_xMO_2$ (M is a transition metal, preferably selected from one or more of Mn, Fe, Ni, Co, V, Cu, and Cr, with $0 < x \leq 1$), manganese-based oxides, vanadium-based oxides, and respective modified compounds thereof. Examples of organic polymeric materials may include, but are not limited to, poly-2,2,6,6-tetramethylpiperidoxy-4-vinyl ether (PTVE). The present application is not limited to these materials, and other conventionally known materials that can be used as positive electrode active materials for batteries can also be used. These positive electrode active materials may be used alone or in combination of two or more.

Optionally, the modified compounds of each of the above-mentioned positive electrode active materials can be obtained by subjecting positive electrode active materials to doping modification, surface coating modification, or surface coating modification at the same time of doping.

By way of example, the negative electrode active material includes one or more of artificial graphite, natural graphite, soft carbon, hard carbon, activated carbon, transition metal oxides, and organic polymeric materials. Examples of the organic polymeric materials may include, but are not limited to, polyimide (PI), and quinones, e.g., poly(2-vinylanthraquinone) (PVAQ). The present application is not limited to these materials, and other conventionally known materials that can be used as negative electrode active materials for batteries can also be used. These negative electrode active materials may be used alone or in combination of two or more.

**Battery module and battery pack**

In some embodiments of the present application, the batteries according to the present application may be assembled into a battery module, wherein the number of batteries contained in the battery module may be multiple, and the specific number may be adjusted according to the application and capacity of the battery module.

In the battery module, a plurality of batteries may be arranged in sequence along the length direction of the battery module. Of course, they can also be arranged in any other arbitrary way. Furthermore, the plurality of batteries can be fixed by fasteners.

Optionally, the battery module may further include a housing having an accommodating space in which the plurality of batteries are accommodated.

In some embodiments of the present application, the above-mentioned battery modules can also be assembled into a battery pack, wherein the number of battery modules included in the battery pack can be adjusted according to the application and capacity of the battery pack.

Optionally, the battery pack may further include a battery case and a plurality of battery modules provided in the battery case. The battery case comprises an upper case body and a lower case body, wherein the upper case body is used for covering the lower case body to form a closed space for accommodating battery modules. The multiple battery modules can be arranged in the battery case in any manner.

## Powered device

Embodiments of the present application also provide a powered device, wherein the powered device comprises at least one of the battery, battery module, and battery pack of the present application. The battery, battery module or battery pack can be used as a power source of the powered device, and can also be used as an energy storage unit of the powered device. The powered device can be, but is not limited to, mobile devices (such as mobile phones and laptop computers), electric vehicles (such as full electric vehicles, hybrid electric vehicles, plug-in hybrid electric vehicles, electric bicycles, electric scooters, electric golf carts and electric trucks), electric trains, ships, satellites, energy storage systems, etc.

In the powered device, a battery, a battery module or a battery pack can be selected according to the usage requirements thereof.

Figure 2 is a schematic diagram of a powered device as an example. The powered device is a full electric vehicle, a hybrid electric vehicle, or a plug-in hybrid electric vehicle, etc. In order to meet the high power and high energy density requirements of the powered device, a battery pack or a battery module can be used.

As another example, the powered device may be a mobile phone, a tablet computer, a laptop computer, etc. The powered device is usually required to be thin and light, and a battery can be used as a power source.

## Example

The following examples more specifically describe the disclosure of the present application. These examples are for illustrative descriptions only, since various modifications and changes within the scope of the disclosure of the present application will be apparent to those skilled in the art. Unless otherwise stated, all parts, percentages, and ratios reported in the following examples are on a weight basis, and all reagents used in the examples are either commercially available or synthesized according to conventional methods and can be directly used without further processing, and the instruments used in the examples are all commercially available.

**Example 1**

Preparation of positive electrode piece

The positive electrode active material $Na_{0.44}MnO_2$, the conductive agent carbon black, and the binder PVA were fully stirred and mixed in an appropriate amount of deionized water at a mass ratio of 96 : 2 : 2 to form a uniform positive electrode slurry; and the positive electrode slurry was applied on both surfaces of a positive electrode current collector aluminum foil, dried and cold pressed to obtain a positive electrode piece.

Preparation of negative electrode piece

The negative electrode active material hard carbon, the conductive agent carbon black, and the binder PVA were fully stirred and mixed in an appropriate amount of deionized water at a mass ratio of 95 : 2.5 : 2.5 to form a uniform negative electrode slurry; and the negative electrode slurry was applied on both surfaces of a negative electrode current collector copper foil, dried and cold pressed to obtain a negative electrode piece.

Preparation of separator

$3CaO \cdot SiO_2$ (with a Dv10 of 4.7 $\mu$m) was dissolved in dimethyl carbonate to obtain a coating slurry; a gravure roll was immersed in the slurry, and as the gravure roll rotated, the slurry filled pits on the surface of the gravure roll; the slurry on the surface of the gravure roll was scraped off with a scraper, leaving only the slurry in the pits; and when the gravure roll was transferred to the position of contact with a base film (a porous polyethylene film with a thickness of 7 $\mu$m), under the action of a pressing roll, the slurry in the pits was transferred to one of the surfaces of the base film. The slurry coating length was about 10 $\mu$m, and the coating thickness was 5 $\mu$m.

Preparation of electrolyte solution

$Na_2SO_4$ was uniformly dissolved in deionized water to obtain an electrolyte solution with pH = 7, wherein the concentration of $Na_2SO_4$ was 1 mol/L.

Preparation of battery

The above-prepared positive electrode piece, separator, and negative electrode piece were stacked in sequence and wound to obtain a wound electrode assembly; and the wound electrode assembly was put into an aluminum casing, and after processes such as end cap welding, liquid injection, packaging, standing, and chemical formation, a cylindrical battery was obtained.

## Examples 2-19 and Comparative Examples 1 and 2

The preparation method for the battery was similar to that of Example 1, except that the preparation parameters of the separator were adjusted, as shown in Table 1 for details.

Table 1

| No. | Coating | | | |
|---|---|---|---|---|
| | Hydraulic inorganic material | Additives | Dv10 ($\mu$m) | Thickness ($\mu$m) |
| Example 1 | $3CaO \cdot SiO_2$ | / | 4.7 | 5 |
| Example 2 | $3CaO \cdot SiO_2$ | / | 4.7 | 3 |
| Example 3 | $3CaO \cdot SiO_2$ | / | 4.7 | 2 |
| Example 4 | $3CaO \cdot SiO_2$ | / | 4.7 | 1 |
| Example 5 | $3CaO \cdot SiO_2$ | / | 4.7 | 0.5 |
| Example 6 | $3CaO \cdot Al_2O_3$ | / | 4.5 | 3 |
| Example 7 | $2CaO \cdot Fe_2O_3$ | / | 4.9 | 1 |
| Example 8 | $2CaO \cdot SiO_2$ | / | 4.1 | 1 |
| Example 9 | $3CaO \cdot SiO_2$ | 3% dihydrate gypsum | 6.4 | 1 |
| Example 10 | $3CaO \cdot Al_2O_3$ | / | 4.5 | 1 |
| Example 11 | $3CaO \cdot 3Al_2O_3 \cdot CaF_2$ | / | 5.5 | 1 |
| Example 12 | $3CaO \cdot 3Al_2O_3 \cdot BaSO_4$ | / | 6.9 | 1 |
| Example 13 | $3CaO \cdot 3Al_2O_3 \cdot CaSO_4$ | / | 6.3 | 1 |
| Example 14 | $4CaO \cdot Al_2O_3 \cdot Fe_2O_3$ | / | 6.0 | 1 |
| Example 15 | $50\% \ 3CaO \cdot Al_2O_3 + 50\% \ 2CaO \cdot SiO_2$ | / | 5.0 | 1 |
| Example 16 | $CaO \cdot Al_2O_3 \cdot 2SiO_2$ | / | 4.4 | 1 |
| Example 17 | $CaO \cdot 3Al_2O_3 \cdot 3CaF_2$ | / | 5.5 | 1 |
| Example 18 | $CaO \cdot 3Al_2O_3 \cdot 4CaF_2$ | / | 5.5 | 1 |
| Example 19 | $3CaO \cdot Al_2O_3$ | / | 4.5 | 4 |
| Comparative Example 1 | / | / | / | / |
| Comparative Example 2 | Alumina ceramic | / | 3.7 | 1 |

## Performance test section

(1) Test for heat of hydration of coating

A freshly prepared separator was taken for testing, a sample was taken from a coating in any area of a separator by powder scraping, and the mass of the entire collected sample was weighed; and the entire collected sample is put into an ampoule, metered water is drawn with a syringe on an electric stirrer, the electric stirrer is then inserted into the ampoule, the electric stirrer and the ampoule are then placed together in a measuring position of a microcalorimeter, the water in the syringe is finally poured into the ampoule, and stirring and recording are started to obtain the total heat release during the test period. Heat of hydration of coating (J/g) = total heat release (J)/mass of sample (g). The test period was 48 hours, the test temperature was room temperature, and the microcalorimeter was TAM Air eight-channel microcalorimeter.

(2) Test for compressive strength of coating

After the battery was fully discharged, the separator was disassembled, and a fully hardened area at a winding start end was taken for testing; the separator was placed in an oven at 45°C for 30 min to remove excess electrolyte solution; thereafter, the separator was placed in the center position of a lower platen of YN-200-400 microcomputer compressive strength tester; and the instrument was started and loaded continuously at a constant speed until the separator was ruptured, and the failure load at this time was recorded. The loading speed was 0.4 MPa/s to 0.6 MPa/s.

The compressive strength of the coating was calculated according to the formula p = P/A, where p represented the compressive strength of the sample, P represented the failure load of the sample, and A represented the area of the sample.

(3) Test for internal temperature of battery

The change in the internal temperature of the battery was monitored by sticking a temperature sensing wire onto the outer surface of the wound electrode assembly, and the highest temperature of heat generated inside the battery was recorded. The temperature detection instrument was KSD301 temperature sensor.

(4) Rate performance test

At 25°C, the battery was charged to 2.0 V with a constant current of 1/3 C and continued to be charged with a constant voltage until the current was 0.05 C; and after standing for 5 min, the battery was discharged to 0.5 V at a constant current of 4 C, and the discharge capacity at a rate of 4 C was recorded.

(5) Cycle performance test

At 25°C, the battery was charged to 2.0 V with a constant current of 1/3 C and continued to be charged with a constant voltage until the current was 0.05 C, and at this time, the battery was in a fully charged state, and the charging capacity at this time was recorded, i.e. the charging capacity of the first lap; and after standing for 5 min, the battery was discharged to 0.5 V at a constant current of 4 C, which was a cyclic charge-discharge process, and the discharge capacity at this time was recorded, i.e., the discharge capacity of the first cycle. The battery was subjected to a cyclic charge-discharge test according to the above method, and the discharge capacity after each cycle was recorded.
Battery capacity retention rate upon 500 cycles (%) = discharge capacity at 500th cycle/discharge capacity at 1st cycle $\times$ 100%.

Table 2 provided the performance test results of Examples 1-19 and Comparative Examples 1 and 2.

Table 2

| No. | Coating | | Battery | | |
| --- | --- | --- | --- | --- | --- |
| | Heat of hydration (J/g) | Compressive strength (Pa) | Maximum temperature °C) | Discharge capacity at 4 C (Ah) | Capacity retention rate upon 500 cycles |
| Example 1 | 495 | 9940 | 70.2 | 52.3 | 87.4% |
| Example 2 | 462 | 9290 | 62.4 | 51.8 | 88.3% |
| Example 3 | 418 | 9000 | 57.3 | 51.4 | 89.4% |
| Example 4 | 362 | 6500 | 53.7 | 50.8 | 90.4% |

(continued)

| No. | Coating | | Battery | | |
|---|---|---|---|---|---|
| | Heat of hydration (J/g) | Compressive strength (Pa) | Maximum temperature °C) | Discharge capacity at 4 C (Ah) | Capacity retention rate upon 500 cycles |
| Example 5 | 350 | 2875 | 53.1 | 50.7 | 89.7% |
| Example 6 | 489 | 9420 | 69.5 | 52.1 | 89.0% |
| Example 7 | 326 | 3220 | 52.0 | 50.1 | 89.1% |
| Example 8 | 337 | 4370 | 52.2 | 50.4 | 89.4% |
| Example 9 | 342 | 4930 | 52.9 | 50.5 | 90.6% |
| Example 10 | 440 | 7900 | 58.2 | 51.5 | 90.8% |
| Example 11 | 379 | 6910 | 54.9 | 51.0 | 90.9% |
| Example 12 | 410 | 7389 | 57.0 | 51.3 | 91.0% |
| Example 13 | 425 | 7620 | 57.4 | 51.4 | 91.2% |
| Example 14 | 371 | 6719 | 54.3 | 50.9 | 91.6% |
| Example 15 | 385 | 7018 | 55.2 | 51.1 | 91.8% |
| Example 16 | 399 | 7215 | 56.1 | 51.2 | 92.1% |
| Example 17 | 300 | 2900 | 50.3 | 49.0 | 87.9% |
| Example 18 | 270 | 2750 | 48.5 | 48.1 | 86.8% |
| Example 19 | 520 | 9645 | 72.1 | 52.6 | 87.2% |
| Comparative Example 1 | / | / | 45.2 | 47.6 | 85.3% |
| Comparative Example 2 | 113 | 250 | 46.3 | 47.7 | 86.3% |

As can be seen from the test results in Table 2, after the coating containing the hydraulic inorganic material in the present application was soaked in the electrolyte solution, the hydraulic inorganic material in the coating could react with the solvent water and cause the coating to be fully hardened, thereby significantly increasing the tensile strength of the separator. Therefore, the separator was less likely to deform during battery formation and charge-discharge cycling, thereby effectively inhibiting the collapse of the central hole and the growth of dendrites, thus improving the safety performance and cycle performance of the battery. After the coating containing the hydraulic inorganic material in the present application was soaked in the electrolyte solution, an appropriate amount of heat could also be released, thereby increasing the transmission speed of active ions between the positive and negative electrodes of the battery and improving the rate performance of the battery.

In Comparative Example 2, although the alumina ceramic coating provided on the surface of the base film could increase the compressive strength of the separator to a certain extent, the compressive strength of the separator was relatively low, which could not effectively suppress the collapse of the central hole and has less effect on improving the cycle performance of the battery.

The above descriptions are only specific implementations of the present application; however, the scope of protection of the present application is not limited thereto. Therefore, the scope of protection of the present application should be defined by the scope of protection of the claims.

## Claims

1.    An electrode assembly comprising:

a first electrode piece;
a second electrode piece with opposite polarity to the first electrode piece; and
a separator arranged between the first electrode piece and the second electrode piece,
wherein
the electrode assembly is obtained by winding the first electrode piece, the second electrode piece and the separator; and

the separator comprises a base film and a coating provided on at least part of the surface of the base film, and the coating comprises a hydraulic inorganic material capable of hardening upon reaction with water, **characterised in that** the coating is located in a region from 0 cm to L cm from a winding start end of the separator, with $10 \leq L \leq 20$, wherein the coating is only provided in this partial area of the winding start end of the separator.

2. The electrode assembly according to claim 1, wherein the hydraulic inorganic material comprises at least one compound represented by formula 1,

$$\text{first oxide} \cdot \text{a second oxide} \cdot \text{b sulfate} \cdot \text{c halide} \qquad \text{formula 1}$$

wherein

$$0 < a \leq 6,\ 0 \leq b \leq 4,$$

and $0 \leq c \leq 4$;

the first oxide represents CaO or BaO;

the second oxide represents component 1, component 2, or a combination thereof, wherein component 1 represents $SiO_2$, $Al_2O_3$, $Fe_2O_3$, or a combination of two or more thereof, component 2 represents FeO, MgO, BaO, $K_2O$, $Na_2O$, $TiO_2$, CuO, $Cr_2O_3$, $P_2O_5$, $SO_3$, or a combination of two or more thereof, and optionally, the mass ratio of component 1 to component 2 is (95-100) : (0-5);

the sulfate represents $CaSO_4$, $MgSO_4$, $BaSO_4$, $SrSO_4$, $ZnSO_4$, $Al_2(SO_4)_3$, $FeSO_4$, $Fe_2(SO_4)_3$, or a combination of two or more thereof; and

the halide represents $CaCl_2$, $CaF_2$, or a combination thereof.

3. The electrode assembly according to claim 1 or 2, wherein the hydraulic inorganic material comprises one or more of compounds represented by formulas 1-1 to 1-8,

$$CaO \cdot a1\ SiO_2 \cdot b\ \text{sulfate} \cdot c\ \text{halide} \qquad \text{formula 1-1}$$

$$CaO \cdot a2\ Al_2O_3 \cdot b\ \text{sulfate} \cdot c\ \text{halide} \qquad \text{formula 1-2}$$

$$CaO \cdot a3\ Fe_2O_3 \cdot b\ \text{sulfate} \cdot c\ \text{halide} \qquad \text{formula 1-3}$$

$$CaO \cdot a4\ Al_2O_3 \cdot a5\ SiO_2 \cdot b\ \text{sulfate} \cdot c\ \text{halide} \qquad \text{formula 1-4}$$

$$CaO \cdot a6\ Al_2O_3 \cdot a7\ Fe_2O_3 \cdot b\ \text{sulfate} \cdot c\ \text{halide} \qquad \text{formula 1-5}$$

$$BaO \cdot a8\ SiO_2 \cdot b\ \text{sulfate} \cdot c\ \text{halide} \qquad \text{formula 1-6}$$

$$BaO \cdot a9\ Al_2O_3 \cdot b\ \text{sulfate} \cdot c\ \text{halide} \qquad \text{formula 1-7}$$

$$BaO \cdot a10\ Al_2O_3 \cdot a11\ SiO_2 \cdot b\ \text{sulfate} \cdot c\ \text{halide} \qquad \text{formula 1-8}$$

wherein

$$0 < a1 \leq 6,$$

$$0 < a2 \leq 6,$$

$$0 < a3 \leq 6,$$

$$0 < a4 < 6,$$

0 < a 5 < 6, with 0 < a4 + a5 ≤ 6,

$$0 < a6 < 6,$$

0 < a7 < 6, with 0 < a6 + a7 ≤ 6,

$$0 < a8 \le 6,$$

$$0 < a9 \le 6,$$

$$0 < a10 < 6,$$

0<a11 < 6, with 0 < a10 + a11 ≤ 6,

$$0 \le b \le 4,$$

$$0 \le c \le 4,$$

the sulfate represents $CaSO_4$, $MgSO_4$, $BaSO_4$, $SrSO_4$, $ZnSO_4$, $Al_2(SO_4)_3$, $FeSO_4$, $Fe_2(SO_4)_3$, or a combination of two or more thereof; and
the halide represents $CaCl_2$, $CaF_2$, or a combination thereof.

4. The electrode assembly according to claim 2 or 3, wherein

$$b = 0$$

and/or

$$c = 0.$$

5. The electrode assembly according to any one of claims 1-4, wherein the hydraulic inorganic material comprises one or more of $2CaO \cdot SiO_2$, $3CaO \cdot SiO_2$, $CaO \cdot Al_2O_3$, $CaO \cdot 2Al_2O_3$, $3CaO \cdot Al_2O_3$, $6CaO \cdot 2Al_2O_3$, $12CaO \cdot 7Al_2O_3$, $CaO \cdot Fe_2O_3$, $2CaO \cdot Fe_2O_3$, $2CaO \cdot Al_2O_3 \cdot SiO_2$, $CaO \cdot Al_2O_3 \cdot 2SiO_2$, $4CaO \cdot Al_2O_3 \cdot Fe_2O_3$, $6CaO \cdot Al_2O_3 \cdot 2Fe_2O_3$, $3CaO \cdot 3Al_2O_3 \cdot CaSO_4$, $3CaO \cdot 3Al_2O_3 \cdot MgSO_4$, $3CaO \cdot 3Al_2O_3 \cdot BaSO_4$, $3CaO \cdot 3Al_2O_3 \cdot SrSO_4$, $3CaO \cdot 3Al_2O_3 \cdot ZnSO_4$, $3CaO \cdot 3Al_2O_3 \cdot Al_2(SO_4)_3$, $3CaO \cdot 3Al_2O_3 \cdot FeSO_4$, $3CaO \cdot 3Al_2O_3 \cdot Fe_2(SO_4)_3$, $2CaO \cdot SiO_2 \cdot CaSO_4$, $11CaO \cdot 7Al_2O_3 \cdot CaF_2$, $3CaO \cdot 3Al_2O_3 \cdot CaF_2$, $CaO \cdot 3Al_2O_3 \cdot 3CaF_2$, $CaO \cdot 3Al_2O_3 \cdot 4CaF_2$, $2BaO \cdot SiO_2$, $3BaO \cdot SiO_2$, $BaO \cdot Al_2O_3$, $3BaO \cdot Al_2O_3$, $BaO \cdot 6Al_2O_3$, $BaO \cdot Al_2O_3 \cdot SiO_2$, and $BaO \cdot Al_2O_3 \cdot 2SiO_2$, and
optionally, the hydraulic inorganic material comprises one or more of $2CaO \cdot SiO_2$, $3CaO \cdot SiO_2$, $3CaO \cdot Al_2O_3$, and $4CaO \cdot Al_2O_3 \cdot Fe_2O_3$, wherein the hydraulic inorganic material is particles with a volume particle diameter Dv10 of 1 μm to 10 μm, optionally 3 μm to 5 μm particles.

6. The electrode assembly according to any one of claims 1-5, wherein the mass percentage content of the hydraulic inorganic material is 95-100%, optionally 97-100%, based on the total mass of the coating.

7. The electrode assembly according to any one of claims 1-6, wherein the coating further comprises an additive, including one or more of a water-reducing admixture, gypsum, volcanic ash, fly ash, slag, quartz sand, limestone, and clay, wherein the mass percentage content of the additive is ≤ 5%, optionally ≤ 3%, based on the total mass of the coating.

8. The electrode assembly according to any one of claims 1-7, wherein

the total thickness of the coating is 0.5 μm to 5 μm, optionally 0.5 μm to 2 μm, and/or
the thickness of the base film is 5 μm to 12 μm, optionally 6 μm to 7 μm, wherein the base film is selected from one or more of a polyolefin porous film, a non-woven fabric, and glass fibers.

9. A battery comprising an electrode assembly and an electrolyte solution, wherein the electrode assembly is the electrode assembly according to any one of claims 1-8, and the electrolyte solution comprises an electrolyte salt and water.

10. The battery according to claim 9, wherein the battery is a lithium ion battery, a sodium ion battery, a potassium ion battery, a zinc ion battery, a calcium ion battery, a magnesium ion battery, an aluminum ion battery, or a mixed ion battery.

11. A battery module comprising the battery according to claim 9 or 10.

12. A battery pack comprising one of the battery according to claim 9 or 10 and the battery module according to claim 11.

13. A powered device comprising at least one of the battery according to claim 9 or 10, the battery module according to claim 11, and the battery pack according to claim 12.

**Patentansprüche**

1. Elektrodenanordnung, die Folgendes umfasst:

   ein erstes Elektrodenstück;
   ein zweites Elektrodenstück mit entgegengesetzter Polarität zu dem ersten Elektrodenstück; und
   einen Separator, der zwischen dem ersten Elektrodenstück und dem zweiten Elektrodenstück angeordnet ist, wobei
   die Elektrodenanordnung durch Wickeln des ersten Elektrodenstücks, des zweiten Elektrodenstücks und des Separators erhalten wird; und
   der Separator eine Grundfolie und eine Beschichtung, die auf mindestens einem Teil der Oberfläche der Grundfolie bereitgestellt ist, umfasst und die Beschichtung ein hydraulisches anorganisches Material umfasst, das bei Reaktion mit Wasser härten kann, **dadurch gekennzeichnet, dass** sich die Beschichtung in einem Bereich von 0 cm bis L cm von einem Wickelanfangsende des Separators befindet, wobei $10 \leq L \leq 20$, wobei die Beschichtung nur in diesem Teilbereich des Wickelanfangsendes des Separators bereitgestellt ist.

2. Elektrodenanordnung nach Anspruch 1, wobei das hydraulische anorganische Material mindestens eine Verbindung umfasst, die durch Formel 1 dargestellt ist:

   erstes Oxid·a zweites Oxid·b Sulfat·c Halogenid                    Formel 1,

   wobei

$$0 < a \leq 6,$$

   $0 \leq b \leq 4$ und $0 \leq c \leq 4$;

   das erste Oxid CaO oder BaO darstellt;
   das zweite Oxid Komponente 1, Komponente 2 oder eine Kombination davon darstellt, wobei Komponente 1 $SiO_2$, $Al_2O_3$, $Fe_2O_3$ oder eine Kombination aus zwei oder mehr davon darstellt, Komponente 2 FeO, MgO, BaO, $K_2O$, $Na_2O$, $TiO_2$, CuO, $Cr_2O_3$, $P_2O_5$, $SO_3$ oder eine Kombination aus zwei oder mehr davon darstellt und optional das Massenverhältnis von Komponente 1 zu Komponente 2 (95-100) : (0-5) beträgt;
   das Sulfat $CaSO_4$, $MgSO_4$, $BaSO_4$, $SrSO_4$, $ZnSO_4$, $Al_2(SO_4)_3$, $FeSO_4$, $Fe_2(SO_4)_3$ oder eine Kombination aus zwei oder mehr davon darstellt; und
   das Halogenid $CaCl_2$, $CaF_2$ oder eine Kombination davon darstellt.

3. Elektrodenanordnung nach Anspruch 1 oder 2, wobei das hydraulische anorganische Material eine oder mehrere der Verbindungen umfasst, die durch die Formeln 1-1 bis 1-8 dargestellt sind:

   CaO·a1 $SiO_2$·b Sulfat·c Halogenid                    Formel 1-1

$$CaO \cdot a2 \ Al_2O_3 \cdot b \ Sulfat \cdot c \ Halogenid \qquad Formel \ 1\text{-}2$$

$$CaO \cdot a3 \ Fe_2O_3 \cdot b \ Sulfat \cdot c \ Halogenid \qquad Formel \ 1\text{-}3$$

$$CaO \cdot a4 \ Al_2O_3 \cdot a5 \ SiO_2 \cdot b \ Sulfat \cdot c \ Halogenid \qquad Formel \ 1\text{-}4$$

$$CaO \cdot a6 \ Al_2O_3 \cdot a7 \ Fe_2O_3 \cdot b \ Sulfat \cdot c \ Halogenid \qquad Formel \ 1\text{-}5$$

$$BaO \cdot a8 \ SiO_2 \cdot b \ Sulfat \cdot c \ Halogenid \qquad Formel \ 1\text{-}6$$

$$BaO \cdot a9 \ Al_2O_3 \cdot b \ Sulfat \cdot c \ Halogenid \qquad Formel \ 1\text{-}7$$

$$BaO \cdot a10 \ Al_2O_3 \cdot a11 \ SiO_2 \cdot b \ Sulfat \cdot c \ Halogenid \qquad Formel \ 1\text{-}8,$$

wobei

$$0 < a1 \leq 6,$$

$$0 < a2 \leq 6,$$

$$0 < a3 \leq 6,$$

$$0 < a4 < 6,$$

$0 < a5 < 6$, wobei $0 < a4 + a5 \leq 6$,

$$0 < a6 < 6,$$

$0 < a7 < 6$, wobei $0 < a6 + a7 \leq 6$,

$$0 < a8 \leq 6,$$

$$0 < a9 \leq 6,$$

$$0 < a10 < 6,$$

$0 < a11 < 6$, wobei $0 < a10 + a11 \leq 6$,

$$0 \leq b \leq 4,$$

$$0 \leq c \leq 4,$$

das Sulfat $CaSO_4$, $MgSO_4$, $BaSO_4$, $SrSO_4$, $ZnSO_4$, $Al_2(SO_4)_3$, $FeSO_4$, $Fe_2(SO_4)_3$ oder eine Kombination aus zwei oder mehr davon darstellt; und
das Halogenid $CaCl_2$, $CaF_2$ oder eine Kombination davon darstellt.

4. Elektrodenanordnung nach Anspruch 2 oder 3, wobei

b = 0 und/oder
c=0,

5. Elektrodenanordnung nach einem der Ansprüche 1-4, wobei das hydraulische anorganische Material eines oder mehrere von Folgenden umfasst: $2CaO \cdot SiO_2$, $3CaO \cdot SiO_2$, $CaO \cdot Al_2O_3$, $CaO \cdot 2Al_2O_3$, $3CaO \cdot Al_2O_3$, $6CaO \cdot 2Al_2O_3$,

$12CaO \cdot 7Al_2O_3$, $CaO \cdot Fe_2O_3$, $2CaO \cdot Fe_2O_3$, $2CaO \cdot Al_2O_3 \cdot SiO_2$, $CaO \cdot Al_2O_3 \cdot 2SiO_2$, $4CaO \cdot Al_2O_3 \cdot Fe_2O_3$, $6CaO \cdot Al_2O_3 \cdot 2Fe_2O_3$, $3CaO \cdot 3Al_2O_3 \cdot CaSO_4$, $3CaO \cdot 3Al_2O_3 \cdot MgSO_4$, $3CaO \cdot 3Al_2O_3 \cdot BaSO_4$, $3CaO \cdot 3Al_2O_3 \cdot SrSO_4$, $3CaO \cdot 3Al_2O_3 \cdot ZnSO_4$, $3CaO \cdot 3Al_2O_3 \cdot Al_2(SO_4)_3$, $3CaO \cdot 3Al_2O_3 \cdot FeSO_4$, $3CaO \cdot 3Al_2O_3 \cdot Fe_2(SO_4)_3$, $2CaO \cdot SiO_2 \cdot CaSO_4$, $11CaO \cdot 7Al_2O_3 \cdot CaF_2$, $3CaO \cdot 3Al_2O_3 \cdot CaF_2$, $CaO \cdot 3Al_2O_3 \cdot 3CaF_2$, $CaO \cdot 3Al_2O_3 \cdot 4CaF_2$, $2BaO \cdot SiO_2$, $3BaO \cdot SiO_2$, $BaO \cdot Al_2O_3$, $3BaO \cdot 2Al_2O_3$, $BaO \cdot 6Al_2O_3$, $BaO \cdot Al_2O_3 \cdot SiO_2$ und $BaO \cdot Al_2O_3 \cdot 2SiO_2$, und
optional das hydraulische anorganische Material eines oder mehrere von $2CaO \cdot SiO_2$, $3CaO \cdot SiO_2$, $3CaO \cdot Al_2O_3$ und $4CaO \cdot Al_2O_3 \cdot Fe_2O_3$ umfasst, wobei das hydraulische anorganische Material Partikel mit einem volumenbasierten Partikeldurchmesser $D_V10$ von 1 $\mu$m bis 10 $\mu$m, optional Partikel mit 3 $\mu$m bis 5 $\mu$m ist.

6. Elektrodenanordnung nach einem der Ansprüche 1-5, wobei der Massenprozentgehalt des hydraulischen anorganischen Materials 95-100 %, optional 97-100 %, basierend auf der Gesamtmasse der Beschichtung, beträgt.

7. Elektrodenanordnung nach einem der Ansprüche 1-6, wobei die Beschichtung weiter einen Zusatzstoff umfasst, der einen oder mehrere von Folgenden einschließt: eine wasserreduzierende Beimischung, Gips, Vulkanasche, Flugasche, Schlacke, Quarzsand, Kalkstein und Ton, wobei der Massenprozentgehalt des Zusatzstoffs $\leq 5$ %, optional $\leq 3$ %, basierend auf der Gesamtmasse der Beschichtung, beträgt.

8. Elektrodenanordnung nach einem der Ansprüche 1-7, wobei

die Gesamtdicke der Beschichtung 0,5 $\mu$m bis 5 $\mu$m, optional 0,5 $\mu$m bis 2 $\mu$m beträgt und/oder
die Dicke der Grundfolie 5 $\mu$m bis 12 $\mu$m, optional 6 $\mu$m bis 7 $\mu$m beträgt, wobei die Grundfolie aus einem oder mehreren einer porösen Polyolefinfolie, einem Vliesstoff und Glasfasern ausgewählt ist.

9. Batterie, die eine Elektrodenanordnung und eine Elektrolytlösung umfasst, wobei die Elektrodenanordnung die Elektrodenanordnung nach einem der Ansprüche 1-8 ist und die Elektrolytlösung ein Elektrolytsalz und Wasser umfasst.

10. Batterie nach Anspruch 9, wobei die Batterie Folgendes ist: eine Lithium-Ionen-Batterie, eine Natrium-Ionen-Batterie, eine Kalium-Ionen-Batterie, eine Zink-Ionen-Batterie, eine Calcium-Ionen-Batterie, eine Magnesium-Ionen-Batterie, eine Aluminium-Ionen-Batterie, oder eine Gemischt-Ionen-Batterie.

11. Batteriemodul, das die Batterie nach Anspruch 9 oder 10 umfasst.

12. Batteriepack, der eines der Batterie nach Anspruch 9 oder 10 und des Batteriemoduls nach Anspruch 11 umfasst.

13. Betriebenes Gerät, das mindestens eines der Batterie nach Anspruch 9 oder 10, des Batteriemoduls nach Anspruch 11 und des Batteriepacks nach Anspruch 12 umfasst.

**Revendications**

1. Ensemble d'électrodes comprenant :

une première pièce d'électrode ;
une deuxième pièce d'électrode de polarité opposée à celle de la première pièce d'électrode ; et
un séparateur disposé entre la première pièce d'électrode et la deuxième pièce d'électrode, où
l'ensemble d'électrodes est obtenu par enroulement de la première pièce d'électrode, de la deuxième pièce d'électrode et du séparateur ; et
le séparateur comprend un film de base et un revêtement appliqué sur au moins une partie de la surface du film de base, et le revêtement comprend un matériau inorganique hydraulique capable de durcir par réaction avec de l'eau, **caractérisé en ce que** le revêtement est situé dans une zone allant de 0 cm à L cm à partir d'une extrémité de début d'enroulement du séparateur, avec $10 \leq L \leq 20$, où le revêtement n'est fourni que dans cette zone partielle de l'extrémité de début d'enroulement du séparateur.

2. Ensemble d'électrodes selon la revendication 1, dans lequel le matériau inorganique hydraulique comprend au moins un composé représenté par la formule 1,

premier oxyde·a deuxième oxyde·b sulfate·c halogénure                formule 1

dans laquelle

$$0 < a \le 6,$$

$0 \le b \le 4$, et $0 \le c \le 4$;

le premier oxyde représente CaO ou BaO;
le deuxième oxyde représente le composant 1, le composant 2 ou une combinaison de ceux-ci, où le composant 1 représente $SiO_2$, $Al_2O_3$, $Fe_2O_3$, ou une combinaison de deux, ou plus, parmi ceux-ci, le composant 2 représente FeO, MgO, BaO, $K_2O$, $Na_2O$, $TiO_2$, CuO, $Cr_2O_3$, $P_2O_5$, $SO_3$, ou une combinaison de deux, ou plus, parmi ceux-ci, et, éventuellement, le rapport massique du composant 1 au composant 2 est de (95-100) : (0-5);
le sulfate représente $CaSO_4$, $MgSO_4$, $BaSO_4$, $SrSO_4$, $ZnSO_4$, $Al_2(SO_4)_3$, $FeSO_4$, $Fe_2(SO_4)_3$, ou une combinaison de deux, ou plus, parmi ceux-ci ; et
l'halogénure représente $CaCl_2$, $CaF_2$, ou une combinaison de ceux-ci.

3. Ensemble d'électrodes selon la revendication 1 ou 2, dans lequel le matériau inorganique hydraulique comprend un ou plusieurs parmi les composés représentés par les formules 1-1 à 1-8,

$CaO \cdot a1\ SiO_2 \cdot b$ sulfate$\cdot c$ halogénure        formule 1-1

$CaO\text{-}a2\ Al_2O_3 \cdot b$ sulfate$\cdot c$ halogénure        formule 1-2

$CaO\text{-}a3\ Fe_2O_3 \cdot b$ sulfate$\cdot c$ halogénure        formule 1-3

$CaO\text{-}a4\ Al_2O_3 \cdot a5\ SiO_2 \cdot b$ sulfate$\cdot c$ halogénure        formule 1-4

$CaO\text{-}a6\ Al_2O_3 \cdot a7\ Fe_2O_3 \cdot b$ sulfate$\cdot c$ halogénure        formule 1-5

$BaO \cdot a8\ SiO_2 \cdot b$ sulfate$\text{-}c$ halogénure        formule 1-6

$BaO \cdot a9\ Al_2O_3 \cdot b$ sulfate$\cdot c$ halogénure        formule 1-7

$BaO \cdot a10\ Al_2O_3 \cdot a11\ SiO_2 \cdot b$ sulfate$\cdot c$ halogénure        formule 1-8

dans lesquelles

$$0 < al \le 6,$$

$$0 < a2 \le 6,$$

$$0 < a3 \le 6,$$

$$0 < a4 < 6,$$

$0 < a5 < 6$, avec $0 < a4 + a5 \le 6$,

$$0 < a6 < 6,$$

$0 < a7 < 6$, avec $0 < a6 + a7 \le 6$,

$$0 < a8 \le 6,$$

$$0 < a9 \le 6,$$

$$0 < a10 < 6,$$

0 < a11 < 6, avec 0 < a10 + a11 ≤ 6,

$$0 \leq b \leq 4,$$

$$0 \leq c \leq 4,$$

le sulfate représente $CaSO_4$, $MgSO_4$, $BaSO_4$, $SrSO_4$, $ZnSO_4$, $Al_2(SO_4)_3$, $FeSO_4$, $Fe_2(SO_4)_3$, ou une combinaison de deux, ou plus, parmi ceux-ci ; et
l'halogénure représente $CaCl_2$, $CaF_2$, ou une combinaison de ceux-ci.

4. Ensemble d'électrodes selon la revendication 2 ou 3, dans lequel

$$b = 0$$

et/ou

$$c = 0.$$

5. Ensemble d'électrodes selon l'une quelconque des revendications 1-4, dans lequel le matériau inorganique hydraulique comprend un ou plusieurs parmi $2CaO \cdot SiO_2$, $3CaO \cdot SiO_2$, $CaO \cdot Al_2O_3$, $CaO \cdot 2Al_2O_3$, $3CaO \cdot Al_2O_3$, $6CaO \cdot 2Al_2O_3$, $12CaO \cdot 7Al_2O_3$, $CaO \cdot Fe_2O_3$, $2CaO \cdot Fe_2O_3$, $2CaO \cdot Al_2O_3 \cdot SiO_2$, $CaO \cdot Al_2O_3 \cdot 2SiO_2$, $4CaO \cdot Al_2O_3 \cdot Fe_2O_3$, $6CaO \cdot Al_2O_3 \cdot 2Fe_2O_3$, $3CaO \cdot 3Al_2O_3 \cdot CaSO_4$, $3CaO \cdot 3Al_2O_3 \cdot MgSO_4$, $3CaO \cdot 3Al_2O_3 \cdot BaSO_4$, $3CaO \cdot 3Al_2O_3 \cdot SrSO_4$, $3CaO \cdot 3Al_2O_3 \cdot ZnSO_4$, $3CaO \cdot 3Al_2O_3 \cdot Al_2(SO_4)_3$, $3CaO \cdot 3Al_2O_3 \cdot FeSO_4$, $3CaO \cdot 3Al_2O_3 \cdot Fe_2(SO_4)_3$, $2CaO \cdot SiO_2 \cdot CaSO_4$, $11CaO \cdot 7Al_2O_3 \cdot CaF_2$, $3CaO \cdot 3Al_2O_3 \cdot CaF_2$, $CaO \cdot 3Al_2O_3 \cdot 3CaF_2$, $CaO \cdot 3Al_2O_3 \cdot 4CaF_2$, $2BaO \cdot SiO_2$, $3BaO \cdot SiO_2$, $BaO \cdot Al_2O_3$, $3BaO \cdot Al_2O_3$, $BaO \cdot 6Al_2O_3$, $BaO \cdot Al_2O_3 \cdot SiO_2$, et $BaO \cdot Al_2O_3 \cdot 2SiO_2$, et éventuellement, le matériau inorganique hydraulique comprend un ou plusieurs parmi $2CaO \cdot SiO_2$, $3CaO \cdot SiO_2$, $3CaO \cdot Al_2O_3$, et $4CaO \cdot Al_2O_3 \cdot Fe_2O_3$, où le matériau inorganique hydraulique est constitué de particules ayant un diamètre volumique de particule Dv10 allant de 1 μm à 10 μm, éventuellement des particules de 3 μm à 5 μm.

6. Ensemble d'électrodes selon l'une quelconque des revendications 1-5, dans lequel la teneur en pourcentage massique du matériau inorganique hydraulique est de 95-100%, éventuellement de 97-100%, sur la base de la masse totale du revêtement.

7. Ensemble d'électrodes selon l'une quelconque des revendications 1-6, dans lequel le revêtement comprend en outre un additif, comportant un ou plusieurs parmi un adjuvant réducteur d'eau, du gypse, des cendres volcaniques, des cendres volantes, du laitier, du sable de quartz, du calcaire, et de l'argile, où la teneur en pourcentage massique de l'additif est ≤ 5%, éventuellement ≤ 3%, sur la base de la masse totale du revêtement.

8. Ensemble d'électrodes selon l'une quelconque des revendications 1-7, dans lequel

l'épaisseur totale du revêtement va de 0,5 μm à 5 μm, éventuellement de 0,5 μm à 2 μm, et/ou
l'épaisseur du film de base va de 5 μm à 12 μm, éventuellement de 6 μm à 7 μm, où le film de base est choisi parmi un ou plusieurs parmi un film poreux en polyoléfine, un non-tissé et des fibres de verre.

9. Batterie comprenant un ensemble d'électrodes et une solution électrolytique, dans laquelle l'ensemble d'électrodes est l'ensemble d'électrodes selon l'une quelconque des revendications 1-8, et la solution électrolytique comprend un sel électrolytique et de l'eau.

10. Batterie selon la revendication 9, la batterie étant une batterie lithium-ion, une batterie sodium-ion, une batterie potassium-ion, une batterie zinc-ion, une batterie calcium-ion, une batterie magnésium-ion, une batterie aluminium-ion ou une batterie à ions mixtes.

11. Module de batterie comprenant la batterie selon la revendication 9 ou 10.

**12.** Bloc-batterie comprenant un élément parmi la batterie selon la revendication 9 ou 10 et le module de batterie selon la revendication 11.

**13.** Dispositif alimenté comprenant au moins un élément parmi la batterie selon la revendication 9 ou 10, le module de batterie selon la revendication 11, et le bloc-batterie selon la revendication 12.

*FIG. 1*

*FIG. 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112310558 A
- KR 20170062170 A
- US 2019305278 A1
- US 2008096103 A1